# EUROPÄISCHE PATENTSCHRIFT

(11) **EP 2 071 282 B1**
(45) Veröffentlichungstag und Bekanntmachung des Hinweises auf die Patenterteilung: **03.05.2017**
(21) Anmeldenummer: 08105803.4
(22) Anmeldetag: 17.11.2008
(51) Int. Cl.: G01C 15/00, F16F 15/08, G12B 9/04

(54) **Optomechanisches Nivelliergerät**
Optomechanical levelling instrument
Dispositif de nivellement optomécanique

(30) Priorität: 10.12.2007 DE 102007055746
(43) Veröffentlichungstag der Anmeldung: 17.06.2009
(73) Patentinhaber: HILTI Aktiengesellschaft, 9494 Schaan (LI)
(72) Erfinder: Juesten, Detlev, 9467 Frümsen (CH); Steffen, Roman, 9445 Rebstein (CH); Bruggmüller, Peter, 6800 Feldkirch (AT); Eyrich, Petra, 9445 Rebstein (CH)
(74) Vertreter: Hilti Aktiengesellschaft Corporate Intellectual Property

(56) Entgegenhaltungen:
- DE-A1-102006 055 385

## Beschreibung

Die Erfindung bezeichnet ein optomechanisches Nivelliergerät zur Aussendung eines Laserstrahls, der definiert zur Gravitationsachse im Schwerefeld der Erde orientiert ist, insbesondere Laserlote, Mehrachslaser und Rotationslaser.

Üblicherweise ist in einem optomechanischen Nivelliergerät innerhalb des Aussengehäuses ein Optikträger (oft mit der Laserstrahlquelle) vom Schwerefeld ausrichtbar aufgehängt.

Derartige gravitationsempfindliche Nivelliergeräte werden insbesondere als Baulaser im Bauhilfsgewerbe zur Markierung von Befestigungspunkten oder der Definition von Ebenen eingesetzt. In diesem rauen Einsatzumfeld sind obige Baulaser oft vielfältigen Erschütterungen ausgesetzt, welchen sie ohne Qualitätsverlust standhalten müssen.

Nach der EP0715707 ist ein Mehrachslaser bekannt, der sich am Schwerefeld der Erde ausrichtet. Je zwei der fünf Laserstrahlen spannen eine horizontale bzw. vertikale Ebene auf. Nach der US5539990 ist jeder einzelne Laserstrahl zusätzlich horizontal und vertikal aufgefächert.

Nach der US2007113745 ist der vom Schwerefeld der Erde ausrichtbare Optikträger mit der Laserstrahlquelle selbst in einem Trägerrahmen aufgehängt, welcher über Dämpfungselemente elastisch gedämpft an vier Punkten mit dem Aussengehäuse mit einer Bodenfläche verbunden ist. Dabei sind kreuzweise zueinander je zwei vertikal orientierte, hülsenförmige Dämpfungselemente oben und unten mit dem Aussengehäuse über Schrauben festgelegt. Zudem ist die ausrichtbare Aufhängung selbst über zwei horizontal orientierte hülsenförmige Dämpfungselemente stossgedämpft.

Nach der DE 102006055385 A1 umfasst ein Nivelliergerät ein Aussengehäuse mit einer Bodenfläche und einem Trägerrahmen, der innerhalb des Aussengehäuses über obere und untere Dämpfungselemente elastisch gedämpft befestigt ist und an dem ein Optikträger vom Schwerefeld ausrichtbar aufgehängt ist. Die Spannachsen der oberen und unteren Dämpfungselemente verlaufen unter einem Winkel von jeweils 90° zur Bodenfläche des Aussengehäuses. Nachteilig ist, dass die Stossdämpfung der Dämpfungselemente von der Richtung abhängt.

Die Aufgabe der Erfindung besteht in einer weiteren Realisierung eines stossgedämpften optomechanischen Nivelliergerätes. Ein weiterer Aspekt besteht in einer einfachen Montage der Dämpfungselemente sowie in einer in allen Richtungen vergleichbaren Stossdämpfung.

Die Aufgabe wird im Wesentlichen durch die Merkmale des Anspruchs 1 gelöst. Vorteilhafte Weiterbildungen ergeben sich aus den Unteransprüchen.

So weist ein optomechanisches Nivelliergerät innerhalb des Aussengehäuses mit einer Bodenfläche einen über Dämpfungselemente elastisch gedämpft befestigten Trägerrahmen auf, an dem ein Optikträger vom Schwerefeld ausrichtbar aufgehängt ist, wobei die Dämpfungselemente je längs einer Spannachse elastisch vorgespannt sind und sämtliche Spannachsen in einem Winkel grösser 30° und kleiner 60° zur Bodenfläche verlaufen, weiter vorteilhaft in einem Winkel von 45°. Durch die Ausrichtung der Spannachsen in einem Winkel zwischen 30° und 60° zur Bodenfläche ist der Trägerrahmen über (räumliche) Diagonalkräfte im Aussengehäuse verspannt, wodurch die Stossdämpfung in allen Richtungen vergleichbar ist. So werden insbesondere bei einer Ausbildung mit acht an je einer Ecke eines quaderförmigen Trägerrahmens angeordneten Dämpfungselementen bei einem Stoss aus einer beliebigen Richtung immer je vier Dämpfungselemente bezüglich der jeweiligen Spannachse verkürzt bzw. verlängert.

Durch die in sich vorgespannten Dämpfungselemente befindet sich der Trägerrahmen stets in einer durch die resultierende Vorspannkraft sämtlicher Dämpfungselemente bestimmten spielfreien Grundposition.

Vorteilhaft sind die Dämpfungselemente auf Druck vorgespannt, wodurch im Stossereignisfall je die Hälfte der Dämpfungselemente weiter gestaucht und die andere Hälfte entlastet wird.

Vorteilhaft verlaufen sämtliche Spannachsen auch innerhalb des Trägerrahmens, weiter vorteilhaft durch einen gemeinsamen Schnittpunkt, wodurch die zum Schnittpunkt im Wesentlichen radial verlaufenden Spannachsen eine (durch die resultierende Verspannkraft bewirkte) Selbststabilisierung des Trägerrahmens im Aussengehäuse bewirken.

Vorteilhaft weist der Trägerrahmen und/oder das Aussengehäuse senkrecht zu den Spannachsen des jeweiligen Dämpfungselements verlaufende Montageelemente auf, wodurch bei einer Verspannung längs der Spannachsen keine Querkräfte zwischen den Montageelementen und den Dämpfungselementen entstehen.

Vorteilhaft weist das Dämpfungselement zwei Einstecköffnungen auf, weiter vorteilhaft Rechtecköffnungen, wodurch es über diese durch Aufstecken haftreibkraftschlüssig montierbar ist.

Vorteilhaft sind in je eine Einstecköffnung des Dämpfungselements je ein Montageelement des Trägerrahmens und des Außengehäuses eingesteckt, wodurch das Dämpfungselement technologisch einfach montierbar ist.

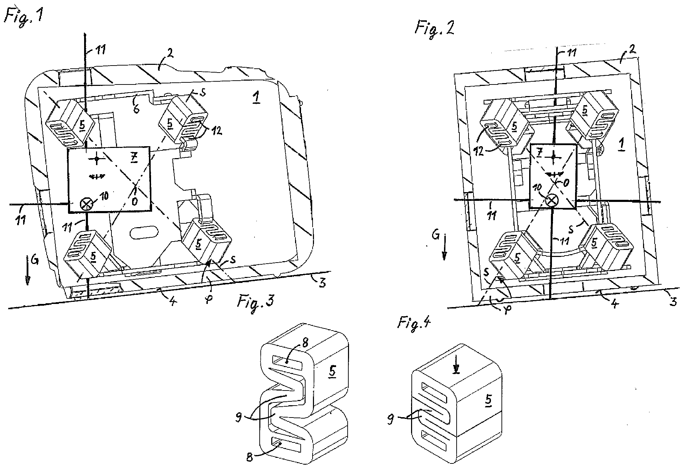

Schwerefeld G ausrichtbar aufgehängt ist. Der Optikträger 7 weist eine Laserstrahlquelle 10 auf, die mehrere zueinander senkrecht orientierte Laserstrahlen 11 aussendet. Die acht (jeweils nur die vier hinteren sind sichtbar) an jeder Ecke des (quaderförmigen) Trägerrahmens 6 angeordneten Dämpfungselemente 5 sind je längs einer zur Bodenfläche 4 in einem Winkel [phi] von nahezu 45° geneigten Spannachse S elastisch auf Druck vorgespannt, wobei die Spannachsen S sämtlich auch innerhalb des Trägerrahmens 6 durch einen gemeinsamen Schnittpunkt O verlaufen. Dazu weisen der Trägerrahmen 6 und das Aussengehäuse 2 jeweils senkrecht zu den Spannachsen S der jeweiligen Dämpfungselemente 5 verlaufende Montageelemente 12 auf, die in je eine von zwei rechteckförmigen Einstecköffnungen 8 (Fig. 3) des Dämpfungselements 5 haftreibungskraftschlüssig eingesteckt sind. Jedes Dämpfungselement 5 besteht aus einem gemischtzelligen Polyätherurethan(PUR) mit einem statischen E-Modul von 3 N/mm^2, einen mechanischen Verlustfaktor von 55% und einer nutzbaren Stossisolation bis zu Pressungen von 1,40 N/mm^2.

Nach Fig. 3 weist das Dämpfungselement 5 zwei im dargestellten nichtverspannten Grundzustand freiliegende mäanderförmige Deformationsbereiche 9 auf, deren Mäanderschlingen alternierend ineinander eingreifen und nach Fig. 4 bei überhoher Druckbeanspruchung gefaltet aneinander anliegen.

## Patentansprüche

1. Optomechanisches Nivelliergerät mit einem Aussengehäuse (2) mit einer Bodenfläche (4) und einem, innerhalb des Aussengehäuses (2) über Dämpfungselemente (5) elastisch gedämpft befestigten Trägerrahmen (6), an dem ein Optikträger (7) vom Schwerefeld (G) ausrichtbar aufgehängt ist, wobei die Dämpfungselemente (5) je längs einer Spannachse (S) elastisch vorgespannt sind, **dadurch gekennzeichnet, dass** sämtliche Spannachsen (S) in einem Winkel ([phi]) grösser 30° und kleiner 60° zur Bodenfläche (4) verlaufen.

2. Optomechanisches Nivelliergerät nach Anspruch 1, **dadurch gekennzeichnet, dass** die Dämpfungselemente (5) auf Druck vorgespannt sind.

3. Optomechanisches Nivelliergerät nach Anspruch 1 oder 2, **dadurch gekennzeichnet, dass** sämtliche Spannachsen (S) auch innerhalb des Trägerrahmens (6) verlaufen.

4. Optomechanisches Nivelliergerät nach einem der Ansprüche 1 bis 3, **dadurch gekennzeichnet, dass** der Trägerrahmen (6) und/oder das Aussengehäuse (2) senkrecht zu den Spannachsen (S) des jeweiligen Dämpfungselements (5) verlaufende Montageelement (12) aufweist.

5. Optomechanisches Nivelliergerät nach einem der Ansprüche 1 bis 4, **dadurch gekennzeichnet, dass** die Dämpfungselemente (5) jeweils zwei Einstecköffnungen (8) aufweisen.

6. Optomechanisches Nivelliergerät nach Anspruch 5, **dadurch gekennzeichnet, dass** in je eine Einstecköffnung (8) des Dämpfungselements (5) je ein Montageelement (12) des Trägerrahmens (6) und ein Montageelement (12) des Aussengehäuses (2) eingesteckt sind.

7. Optomechanisches Nivelliergerät nach einem der Ansprüche 1 bis 6, **dadurch gekennzeichnet, dass** das Dämpfungselement (5) aus einem viskoelastischen Elastomer besteht.

8. Optomechanisches Nivelliergerät nach einem der Ansprüche 1 bis 7, **dadurch gekennzeichnet, dass** das Dämpfungselement (5) zumindest einen mäanderförmigen Deformationsbereich (9) aufweist.

9. Optomechanisches Nivelliergerät nach Anspruch 8, **dadurch gekennzeichnet, dass** zumindest zwei mäanderförmige Deformationsbereiche (9) vorhanden sind.

10. Optomechanisches Nivelliergerät nach einem der Ansprüche 1 bis 9, **dadurch gekennzeichnet, dass** der Optikträger (7) eine Laserstrahlquelle (10) aufweist.

## Claims

1. Optomechanical levelling device with an outer housing (2) with a floor area (4) and a carrier frame (6) fastened inside the outer housing (2) through damping elements (5) in an elastically damped way, on which an optics carrier (7) is suspended that may be aligned by the field of gravity (G), in which the damping elements (5) are pretensioned elastically along a tension axis (S), **characterised in that** all tension axes (S) run at an angle ([phi]) greater than 30° and smaller than 60° to the floor area (4).

2. Optomechanical levelling device according to claim 1, **characterised in that** the damping elements (5) are pretensioned to pressure.

3. Optomechanical levelling device according to claim 1 or 2, **characterised in that** all tension axes (S) also run inside the carrier frame (6).

4. Optomechanical levelling device according to one of claims 1 to 3, **characterised in that** the carrier frame (6) and/or the outer housing (2) has mounting elements (12) running perpendicular to the tension axes (S) of the relevant damping element (5).

5. Optomechanical levelling device according to one of claims 1 to 4, **characterised in that** the damping elements (5) each have two insertion openings (8).

6. Optomechanical levelling device according to claim 5, **characterised in that** a mounting element (12) of the carrier frame (6) and a mounting element (12) of the outer housing (2) are each inserted into an insertion opening (8) of the damping element (5).

7. Optomechanical levelling device according to one of claims 1 to 6, **characterised in that** the damping element (5) consists of a viscoelastic elastomer.

8. Optomechanical levelling device according to one of claims 1 to 7, **characterized in that** the damping element (5) has at least one meander shaped deformation area (9).

9. Optomechanical levelling device according to claim 8, **characterised in that** there are at least two meander shaped deformation areas (9).

10. Optomechanical levelling device according to one of claims 1 to 9, **characterised in that** the optics carrier (7) has a laser beam source (10).

## Revendications

1. Appareil de nivellement opto-mécanique comportant un boîtier extérieur (2) ayant une surface de fond (4) et une armature de support (6) fixée de manière élastiquement amortie à l'intérieur du boîtier extérieur (2) au-dessus d'éléments d'amortissement (5), armature de support à laquelle est suspendu un support optique (7) de manière à pouvoir être orienté par un champ de gravité (G), dans lequel les éléments d'amortissement (5) sont élastiquement précontraints le long d'un axe de précontrainte (S), **caractérisé en ce que** tous les axes de précontrainte (S) s'étendent à un angle ([phi]) supérieur à 30° et inférieur à 60° par rapport à la surface de fond (4).

2. Appareil de nivellement opto-mécanique selon la revendication 1, **caractérisé en ce que** les éléments d'amortissement (5) sont précontraints en compression.

3. Appareil de nivellement opto-mécanique selon la revendication 1 ou 2, **caractérisé en ce que** tous les axes de précontrainte (S) s'étendent également à l'intérieur de l'armature de support (6).

4. Appareil de nivellement opto-mécanique selon l'une des revendications 1 à 3, **caractérisé en ce que** l'armature de support (6) et/ou le boîtier extérieur (2) comporte des éléments de montage (12) s'étendant perpendiculairement aux axes de précontrainte (S) de chaque élément d'amortissement (5).

5. Appareil de nivellement opto-mécanique selon l'une des revendications 1 à 4, **caractérisé en ce que** les éléments d'amortissement (5) comportent respectivement deux ouvertures d'insertion (8).

6. Appareil de nivellement opto-mécanique selon la revendication 5, **caractérisé en ce qu'**un élément de montage (12) de l'armature de support (6) et un élément de montage (12) du boîtier extérieur (2) sont respectivement insérés dans chaque ouverture d'insertion (8) de l'élément d'amortissement (5).

7. Appareil de nivellement opto-mécanique selon l'une des revendications 1 à 6, **caractérisé en ce que** l'élément d'amortissement (5) est constitué d'un élastomère viscoélastique.

8. Appareil de nivellement opto-mécanique selon l'une des revendications 1 à 7, **caractérisé en ce que** l'élément d'amortissement (5) comporte au moins une zone de déformation en forme de méandres (9).

9. Appareil de nivellement opto-mécanique selon la revendication 8, **caractérisé en ce qu'**il existe au moins deux zones de déformation en forme de méandres (9).

10. Appareil de nivellement opto-mécanique selon l'une des revendications 1 à 9, **caractérisé en ce que** le support optique (7) comporte une source de rayonnement laser (10).
